(19) Europäisches Patentamt
European Patent Office
Office européen des brevets

(11) **EP 2 713 490 A2**

## (12) EUROPEAN PATENT APPLICATION

(43) Date of publication:
**02.04.2014 Bulletin 2014/14**

(51) Int Cl.:
***H02M 1/42*** (2007.01)

(21) Application number: **13186506.5**

(22) Date of filing: **27.09.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **28.09.2012 JP 2012216548**<br>  **25.09.2013 JP 2013199008** | (71) Applicant: **Yokogawa Electric Corporation Tokyo 180-8750 (JP)**<br><br>(72) Inventor: **Kawasumi, Yasuyuki Tokyo, 180-8750 (JP)**<br><br>(74) Representative: **Henkel, Breuer & Partner Patentanwälte Maximiliansplatz 21 80333 München (DE)** |

(54) **Switching power supply device and method for circuit design of the switching power supply device**

(57)  A switching power supply device includes a rectifying circuit configured to rectify an AC voltage and to output a rectified voltage, a smoothing capacitor configured to smooth the rectified voltage and to output a smoothed voltage, a first DC-DC converter configured to convert the smoothed voltage into an intermediate voltage and to output the intermediate voltage, and a second DC-DC converter configured to convert the intermediate voltage into an output voltage and to output the output voltage substantially free of ripple. The first DC-DC converter is configured to perform a step-up operation, a step-up/down operation, and a step-down operation according to the smoothed voltage, and to output the intermediate voltage including a ripple or the intermediate voltage substantially free of ripple.

FIG. 1

EP 2 713 490 A2

**Description**

BACKGROUND OF THE INVENTION

Field of the Invention

The present invention relates to a switching power supply device configured to receive an input voltage from a commercial power supply or the like and to output a constant voltage and also relates to a method for circuit design of the switching power supply device. More particularly, the present invention relates to a switching power supply device adaptable for a wide range of an input voltage without using a smoothing capacitor with a large-capacity, and a method for circuit design of the switching power supply device.
Priority is claimed on Japanese Patent Application No. 2012-216548, filed September 28, 2012, and Japanese Patent Application No. 2013-199008, filed September 25, 2013, the contents of which are incorporated herein by reference.

Description of Related Art

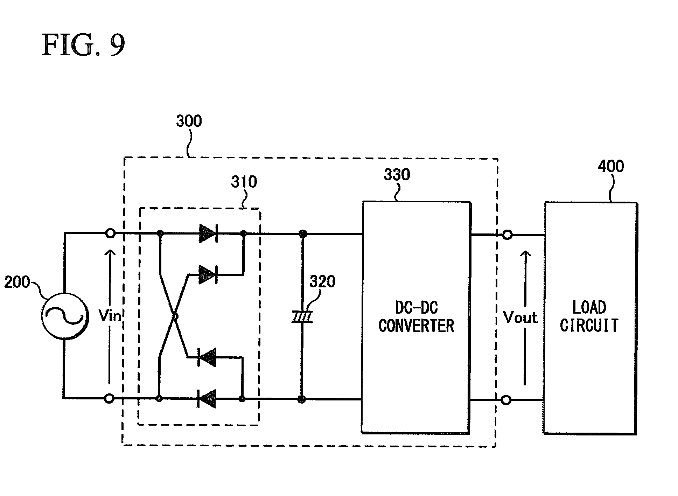

Recently, a switching power supply device has been used as a power supply device to obtain a desired constant voltage from an input voltage source such as a commercial power supply. FIG. 9 is a circuit diagram illustrating a circuit configuration of the switching power supply device of the related art. As illustrated in FIG. 9, the switching power supply device 300 includes a rectifying circuit 310, a smoothing capacitor 320, and a DC-DC converter 330. The switching power supply device 300 is configured to receive an input of an alternating current (AC) input voltage Vin from an AC voltage source 200, to convert the AC input voltage Vin into a DC output voltage Vout, and to supply the DC output voltage Vout to a load circuit 400.
In general, a commercial power supply is used as the AC voltage source 200. The rectifying circuit 310, for example, may be configured by a diode bridge. The smoothing capacitor 320 may be configured by an electrolytic capacitor or the like. The input voltage Vin from the AC voltage source 200 is full-wave rectified by the rectifying circuit 310 to reduce a ripple voltage by the smoothing capacitor 320, so as to generate a DC voltage which is to be supplied to the DC-DC converter 330.
As the DC-DC converter 330, there may be selected an appropriate one from among a step-up converter (boost converter), a step-down converter (buck converter), and a step-up/down converter, where the selection may be made by taking into account a relationship between the input voltage Vin and the output voltage Vout. In addition, when an insulating function is required, there may be used a transformer circuit such as a flyback converter and a forward converter.
The related arts are disclosed in Japanese Unexamined Patent Application, First Publication No. 2002-10643 and United States Patent No. 6591693.
A switching power supply device incorporated in a measuring device, a control device, or a field device may in some cases need to adapt for a wide range of an input voltage from 24V to 240V in AC effective value for covering any available voltage input range. To adapt for such a wide range of the input voltage, the smoothing capacitor 320 needs to have high withstand voltage performance in response to a high voltage input. In addition, the smoothing capacitor 320 needs to have a large capacity so as to suppress the ripple even when the input voltage is low and ensure generating a required output voltage value.
As described above, the smoothing capacitor 320 needs to have high withstand voltage performance and a large capacity to adapt for a wide range of the input voltage. However, a large-sized and expensive electrolytic capacitor is necessary to implement the high withstand voltage performance and the large capacity, leading to the increase in size and cost of the switching power supply device 300.
Therefore, an object of one aspect of the present invention is to provide a switching power supply device and a method for circuit design of the switching power supply device, where the device is adaptable for a wide range of an input voltage without using a smoothing capacitor with a large-capacity.

SUMMARY

According to one aspect of the present invention, a switching power supply device includes a rectifying circuit configured to rectify a first AC voltage having a first effective value and to output a first rectified voltage, the rectifying circuit being configured to rectify a second AC voltage having a second effective value larger than the first effective value and to output a second rectified voltage, and the rectifying circuit being configured to rectify a third AC voltage having a third effective value larger than the second effective value and to output a third rectified voltage, a smoothing capacitor configured to smooth the first rectified voltage and to output a first smoothed voltage, the smoothing capacitor being configured to smooth the second rectified voltage and to output a second smoothed voltage, and the smoothing capacitor being configured to smooth the third rectified voltage and to output a third smoothed voltage, a first DC-DC converter configured to convert the first smoothed voltage into a first intermediate voltage and to output the first intermediate voltage, the first DC-DC converter being configured to convert the second smoothed voltage into a second intermediate voltage and to output the second intermediate voltage, and the first DC-DC converter being configured to convert the third smoothed voltage into a third intermediate voltage and to output the third intermediate voltage, the first DC-DC converter being configured to perform a step-up operation and to output the first intermediate voltage including a ripple upon receipt of input of the first smoothed voltage, the first DC-DC converter being configured to perform a step-up operation or a step-down operation in response to variation in the smoothed voltage and to output the second intermediate voltage including a ripple lower than the ripple of the first intermediate voltage upon receipt of input of the second smoothed voltage, and the first DC-DC converter being configured to perform a step-down operation and to output the third intermediate voltage substantially free of ripple upon receipt of input of the third smoothed voltage, and a second DC-DC converter configured to receive any one of the first intermediate voltage, the second intermediate voltage, or the third intermediate voltage from the first DC-DC converter and to generate an output voltage substantially free of ripple. According to another aspect of the present invention, the first DC-DC converter is configured to have an open loop gain at the frequency which is twice larger than the frequency of the AC voltage where, at the open loop gain, the amount of ripple included in the output voltage of the second DC-DC converter is equal to or less than the upper limit of an allowable range of ripple in accordance with the specifications of the switching power supply device.

According to another aspect of the present invention, the first DC-DC converter is configured to have an open loop gain G*H satisfying following Equations 1 and 2;

$$Vdis/\{(1+G*H)*(1+G2*H2)\} < Vout\_ripple\_spec \quad (1)$$

$$Vin2\_min < Vdis/(1+G*H)+Vref*G*H/(1+G*H) < Vin2\_max \quad (2)$$

where,

Vout_ripple_spec is the allowable amount of ripple in accordance with the specifications of the switching power supply device,
Vdis is the disturbance component depending on the smoothed voltage and a load current,
Vin2_min is the allowable minimum input voltage of the second DC-DC converter,
Vin2_max is the allowable maximum input voltage of the second DC-DC converter,
G*H is the open loop gain of the first DC-DC converter,
G2*H2 is the open loop gain of the second DC-DC converter, and
Vref is the reference voltage.

According to another aspect of the present invention, the first DC-DC converter is configured to have the open loop gain in the range of 0 to 20dB at the frequency which is twice larger than the frequency of the AC voltage.

According to another aspect of the present invention, the output voltage is a DC voltage of 24V, the Vout_ripple_spec is 100mVpp, the Vin2_min is 80V, and the Vin2_max is 120V

According to another aspect of the present invention, an effective value of the first AC voltage is ranged from 24V to 70V, an effective value of the second AC voltage is ranged from 70 V to 120V, and an effective value of the third AC voltage is ranged from 120V to 240V

According to another aspect of the present invention, the effective value of the first AC voltage is 24V, the effective value of the second AC voltage is 100V, and the effective value of the third AC voltage is 240V

According to another aspect of the present invention, the first DC-DC converter is configured to inhibit a negative feedback switching control while the first smoothed voltage is equal to or less than a predetermined reference value, and a variation of the first intermediate voltage is in the allowable range of the input voltage into the second DC-DC converter while the first smoothed voltage is equal to or less than the reference value.

According to another aspect of the present invention, a switching power supply device includes a rectifying circuit configured to rectify an AC voltage and to output a rectified voltage, a smoothing capacitor configured to smooth the rectified voltage and to output a smoothed voltage, a first DC-DC converter configured to convert the smoothed voltage into an intermediate voltage and to output the intermediate voltage, the first DC-DC converter configured to inhibit a negative feedback switching control while the smoothed voltage is equal to or less than a predetermined reference value, and a second DC-DC converter configured to convert the intermediate voltage into an output voltage and to output the output voltage, a variation of the first intermediate voltage being in the allowable range of the input voltage into the second DC-DC converter while the first smoothed voltage is equal to or less than the reference value.

According to another aspect of the present invention, the reference value is 5V.

According to another aspect of the present invention, a minimum value of an allowable input voltage range of the input voltage into the second DC-DC converter is 80V, and a maximum value of an allowable input voltage range of the input voltage into the second DC-DC converter is 120V

According to another aspect of the present invention, the first DC-DC converter includes a transformer, a switch connected to the transformer, and a control unit connected to the switch, and the control unit is configured to detect the smoothed voltage, and to inhibit a control of an on/off time ratio of the switch while the smoothed voltage is equal to or less than the predetermined reference value.

According to another aspect of the present invention, a method for circuit design of a switching power supply device, the switching power supply device including a rectifying circuit configured to rectify an AC voltage and to output a rectified voltage, a smoothing capacitor configured to smooth the rectified voltage and to output a smoothed voltage, a first DC-DC converter configured to convert the smoothed voltage into an intermediate voltage and to output the intermediate voltage, and a second DC-DC converter configured to convert the intermediate voltage into an output voltage and to output the output voltage, the method including determining an open loop gain G*H of the circuit of the first DC-DC converter to have the open loop gain satisfy the following equations 1 and 2;

$$Vdis/\{(1+G*H)*(1+G2*H2)\} < Vout\_ripple\_spec \quad (1)$$

$$Vin2\_min < Vdis/(1+G*H)+Vref*G*H/(1+G*H) < Vin2\_max \qquad (2)$$

where,

Vout_ripple_spec is the allowable amount of ripple in accordance with the specifications of the switching power supply device,
Vdis is the disturbance component depending on the smoothed voltage and a load current,
Vin2_min is the allowable minimum input voltage of the second DC-DC converter,
Vin2_max is the allowable maximum input voltage of the second DC-DC converter,
G*H is the open loop gain of the first DC-DC converter,
G2*H2 is the open loop gain of the second DC-DC converter, and
Vref is the reference voltage.

According to one aspect of the present invention, a switching power supply device and a method for circuit design of the switching power supply device are provided, where the device is adaptable for a wide range of an input voltage without using a smoothing capacitor with a large-capacity.

BRIEF DESCRIPTION OF THE DRAWINGS

FIG. 1 is a block diagram illustrating a configuration of a switching power supply device according to one embodiment of the present invention.
FIG. 2 is a block diagram obtained by modeling a coarse adjustment DC-DC converter as a negative feedback control system.
FIG. 3 is a diagram illustrating an open loop gain of the coarse adjustment DC-DC converter.
FIG. 4 is a block diagram obtained by modeling a control loop of the coarse adjustment DC-DC converter.
FIG. 5 is a block diagram obtained by modeling a control loop of a high-precision DC-DC converter.
FIG. 6A is a diagram illustrating an operation of the coarse adjustment DC-DC converter according to a first technique.
FIG. 6B is a diagram illustrating an operation of the coarse adjustment DC-DC converter according to a first technique.
FIG. 6C is a diagram illustrating an operation of the coarse adjustment DC-DC converter according to a first technique.
FIG. 7 is a block diagram illustrating a configuration of a switching power supply device for explaining a second technique.
FIG. 8A is a diagram illustrating an operation of the coarse adjustment DC-DC converter according to the second technique.

FIG. 8B is a diagram illustrating an operation of the coarse adjustment DC-DC converter according to the second technique.

FIG. 9 is a circuit diagram illustrating a configuration of a switching power supply device of the related art.

## DETAILED DESCRIPTION OF THE INVENTION

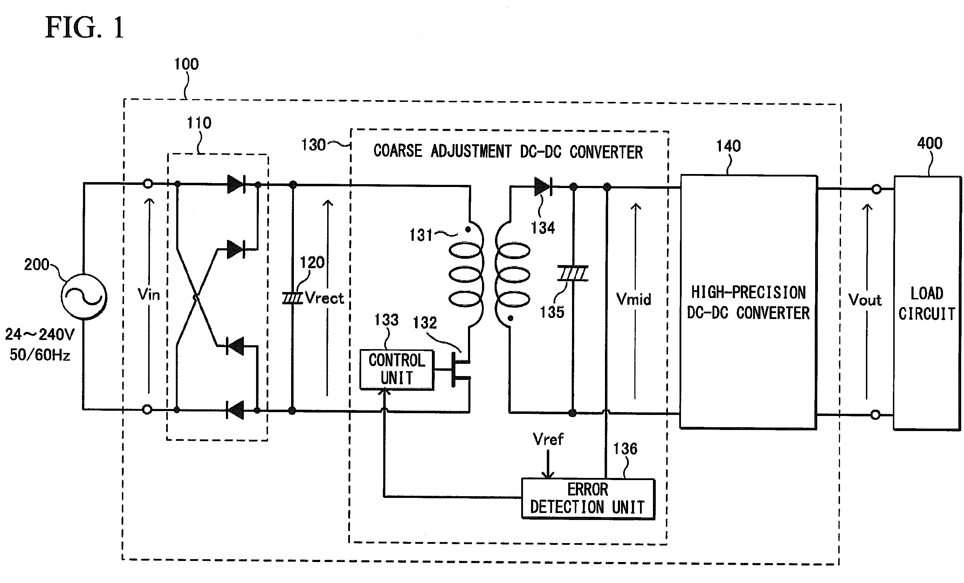

One embodiment of the present invention will be described with reference to the drawings. FIG. 1 is a block diagram illustrating a configuration of a switching power supply device according to the embodiment of the present invention. As illustrated in FIG. 1, the switching power supply device 100 includes a rectifying circuit 110, a smoothing capacitor 120, a first converter (a coarse adjustment converter) 130, and a second DC-DC converter (a high-precision-DC-DC converter) 140, is configured to receive an input of an AC input voltage Vin from an AC voltage source 200, converts the AC input voltage Vin into a DC output voltage Vout, and to output the DC output voltage Vout to a load circuit 400.

The switching power supply device 100 according to this embodiment includes a series connection of DC-DC converters on two-stage, for example the first DC-DC converter 130 on the first stage and the second DC-DC converter 140 on the second stage following to the first stage. The first DC-DC converter 130 on the first stage is configured to perform a preliminary coarse adjustment. The second DC-DC converter 140 on the second stage is configured to perform a final fine adjustment subsequent to the preliminary coarse adjustment made by the first DC-DC converter 130. The second DC-DC converter may be a conventional DC-DC converter.

A commercial power supply may be used as the AC voltage source 200. In general, the commercial power supply has a frequency of 50 Hz or 60 Hz. The switching power supply device 100 is adaptable for a wide range, for example, a voltage range of 24 V to 240 V AC effective value. The switching power supply device 100 is also operable in a DC voltage source.

The rectifying circuit 110, for example, may be constituted by a diode bridge. The smoothing capacitor 120, for example, may be constituted by an electrolyte capacitor.

In this embodiment, the smoothing capacitor 120 is required to have a withstand voltage performance to an assumed maximum voltage. For example, the rectifying circuit 110 is configured to rectify the input of 240 V AC effective value which is the assumed maximum voltage, and to generate a rectified DC voltage of 339 V which is to be applied across the smoothing capacitor 120. Therefore, the smoothing capacitor 120 is required to have a withstand voltage performance to the rectified DC voltage of 339 V. However, a large capacity as in the related art is not required because the DC-DC converters are configured in two stages. At the time of a low voltage, the smoothing capacitor 120 may include a capacity which is less than that required to satisfy an allowable ripple content in accordance with the specifications in the smoothing capacitor 320 of the switching power supply device 300 of the related art.

That is, the smoothing capacitor 120 does not need to have a sufficient effect of smoothing, and a small-sized and cheap capacitor may be used as the smoothing capacitor 120. Therefore, it is possible to prevent an increase in size and cost of the switching power supply device 100.

The input voltage Vin from the AC voltage source 200 is full-wave rectified by the rectifying circuit 110, and hence a rectified voltage is formed, and the rectified voltage is smoothed by the smoothing capacitor 120, and hence a smoothed voltage Vrect is formed and supplied to the coarse adjustment DC-DC converter 130. For example, the rectifying circuit 110 is configured to rectify the input of 240 V AC effective value and to generate a rectified DC voltage of 339 V, to rectify the input of 100 V AC effective value and to generate a rectified DC voltage of 141 V, and to rectify the input of 24 V AC effective value and to generate a rectified DC voltage of 34 V.

Because a large capacity is not required in the smoothing capacitor 120, a smoothed voltage Vrec input to the coarse adjustment DC-DC converter 130 may be a voltage including a large AC ripple. In particular, the occurrence of AC ripple becomes prominent when the input voltage Vin is low and a load of the load circuit 400 is large. On the other hand, when the input voltage Vin is high, the AC ripple is not problematic.

The coarse adjustment DC-DC converter 130 receives an input of an unspecified smoothed voltage Vrect of a wide range, and converts the smoothed voltage Vrect into a predetermined intermediate voltage Vmid. Because of this, a converter of a scheme of performing both a step-up operation and a step-down operation is used. There is a flyback converter, a single-ended primary-inductor converter (SEPIC), etc. as a converter for performing both the step-up operation and the step-down operation according to an input voltage. In this embodiment, an example in which the flyback converter is used will be described.

As illustrated in FIG. 1, the coarse adjustment DC-DC converter 130 includes a transformer 131, a switch 132 such as a field-effect transistor (FET), a control unit 133, a diode 134, a capacitor 135, and an error detection unit 136.

The control unit 133 causes the switch 132 to be switched, so that the smoothed voltage Vrect is input as a high-frequency AC to a primary side of the transformer 131 and energy is transferred to a secondary side. The transferred AC energy is rectified by the diode 134 and further smoothed by the capacitor 135, so that the intermediate voltage Vmid is formed.

The error detection unit 136 compares the intermediate voltage Vmid to a reference voltage Vref, and generates an error signal. The control unit 133 controls the intermediate voltage Vmid to be uniformly maintained by performing a negative feedback switching control controlling a duty ratio which is an on/off time ratio of the switch 132 based on the error signal. In this embodiment, pulse width modulation (PWM) control is performed.

The coarse adjustment DC-DC converter 130 does not need to have high precision as long as an output voltage Vout of the second-stage high-precision DC-DC converter 140 satisfies performance required in accordance with the specifications of the switching power supply device 100, and noise performance or regulation performance of the intermediate voltage Vmid may be relaxed. Therefore, it is possible to configure a simple circuit having a small number of parts and reduce a mounting area.

The high-precision DC-DC converter 140 converts a predetermined intermediate voltage Vmid into a predetermined output voltage Vout. The output voltage Vout may be arbitrarily set according to requirement of the load circuit 400, and the intermediate voltage Vmid may be arbitrarily set according to convenience of a design of the high-precision DC-DC converter 140 and the like.

The high-precision DC-DC converter 140 may select an appropriate type among a step-up converter, a step-down converter, and a step-up/down converter according to a relationship of the intermediate voltage Vmid and the output voltage Vout, and may be configured using a general circuit.

The high-precision DC-DC converter 140 may be a multi-output converter in which a voltage is supplied to a plurality of load circuits 400. In addition, when electrical insulation performance is required at input and output sides of the switching power supply device 100, it is possible to achieve electrical insulation performance by using an insulation converter in at least one of the coarse adjustment DC-DC converter 130 and the high-precision DC-DC converter 140.

As described above, because a large capacity is not required in the smoothing capacitor 120, the smoothed voltage Vrect input to the coarse adjustment DC-DC converter 130 may be a voltage including a large AC ripple when the input voltage Vin is low.

If the coarse adjustment DC-DC converter 130 is designed by using a conventional technique of the related art and the smoothed voltage Vrect includes a large AC ripple at the time of a low voltage input, the input voltage may be insufficient when the output voltage is increased at a point in which a bottom voltage of the AC ripple is low. Therefore, an operation of the control unit 133 is instable or stopped, and an operation of the switching power supply device 100 may be negatively affected.

In this embodiment, even when the smoothed voltage Vrect includes the large AC ripple, the coarse adjustment DC-DC converter 130 is configured not to negatively affect the operation of the switching power supply device 100 without malfunctioning.

(First technique)

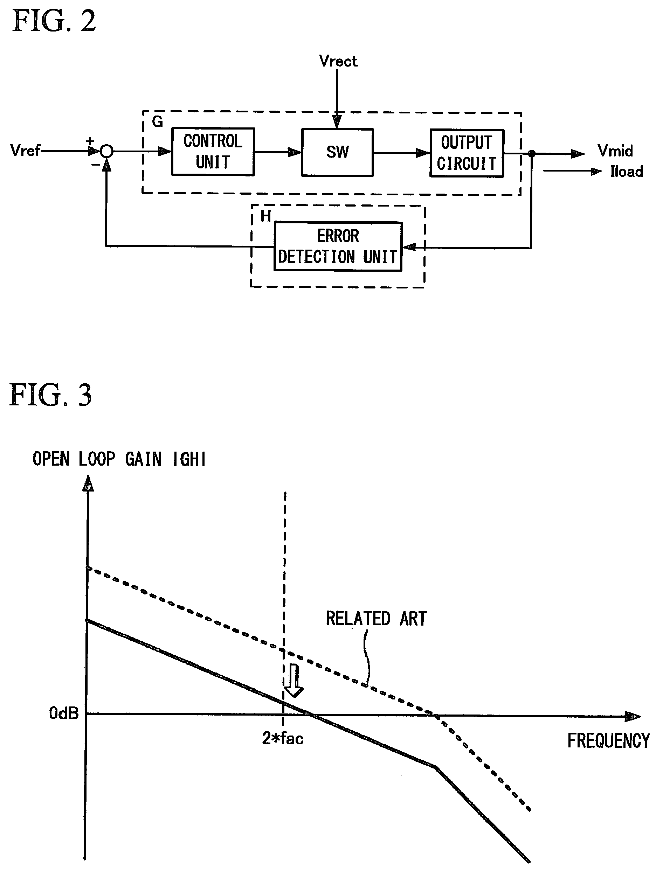

A first technique will be described. FIG. 2 is a block diagram obtained by modeling the coarse adjustment DC-DC converter 130 as a negative feedback control system. In this system, the reference voltage Vref is set as an input, the intermediate voltage Vmid and load current Iload are set as an output, and the voltage Vrect is added as a disturbance. A transfer function G is related to a path of a control unit, a switch, and an output circuit, and a feedback transfer function H is related to an error detection unit.

When a frequency of the input voltage Vin is set as fac, the AC ripple of the smoothed voltage Vrect has a frequency of 2*fac in the case of full-wave rectification.

The DC-DC converter 330 of the related art illustrated in FIG. 9 is configured to have a sufficiently high open loop gain |GH| (the open loop gain |GH| may also be referred to as a "loop gain |GH|", but the "open loop gain |GH|" is used hereinafter) in the vicinity of the ripple frequency of 2*fac as indicated by a dashed line of FIG. 3 in order to suppress the ripple. Thereby, the AC ripple included in the smoothed voltage Vrect is suppressed and a component of the ripple frequency of 2*fac is configured not to be included in an output voltage.

On the other hand, in the coarse adjustment DC-DC converter 130 of the first technique, as indicated by a solid line of FIG. 3, the open loop gain |GH| in the vicinity of the ripple frequency of 2*fac is configured to be decreased close to 0 dB. Thereby, because suppression sensitivity for the AC ripple of the frequency of 2*fac is decreased and the output voltage is configured not to be forcibly increased, it is possible to prevent the operation instability or the operation stop of the control unit 133 due to the lack of the input voltage.

That is, the coarse adjustment DC-DC converter 130 followed by the high-precision DC-DC converter 140 is configured to have an open loop gain at the frequency of 2*fac where, the open loop gain is lower than an open loop gain at the frequency of 2*fac which satisfies an allowable range of ripple included in the output voltage Vout in accordance with the specifications of the switching power supply device 300 when the one-stage DC-DC converter 330 of the related art illustrated in FIG. 9 is used.

On the other hand, the coarse adjustment DC-DC converter 130 needs to be configured to have the open loop gain at the frequency of 2*fac where, at the open loop gain, the amount of ripple included in the output voltage Vout of the high-precision DC-DC converter 140 of the second-stage is equal to or less than the upper limit of an allowable range of ripple in accordance with the specifications of the switching power supply device 100.

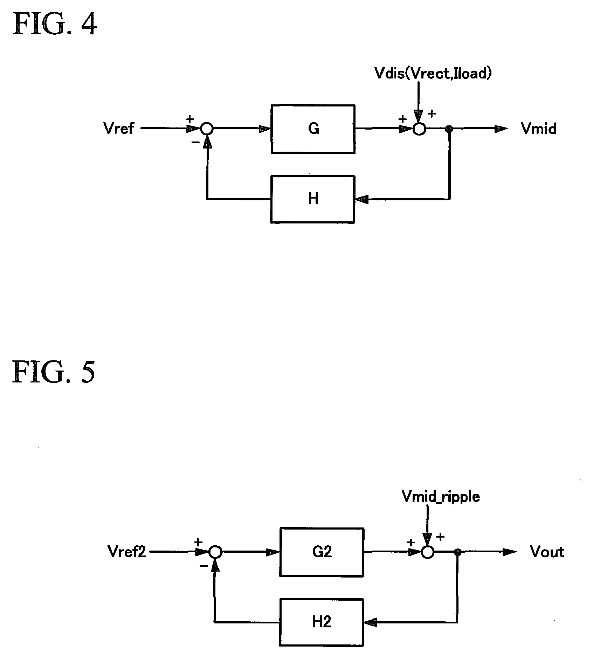

A method for designing gains of the transfer functions G and H will be described in detail with reference to FIGs. 4 and 5 in the first technique. FIG. 4 is a block diagram obtained by modeling a control loop of the coarse adjustment DC-DC converter 130 illustrated in FIG. 2. The AC ripple voltage remained in the intermediate voltage Vmid depends on the smoothed voltage Vrect and the load current Iload, and influences the control loop of the coarse adjustment DC-DC converter 130 as a disturbance. This disturbance component is illustrated in FIG. 4 as a function Vdis (Vrect, Iload). A closed loop characteristic of this control system obtained from FIG. 4 is expressed by the following equation (1).

$$\text{Vmid} = \text{Vdis}/(1+\text{G*H})+\text{Vref*G*H}/(1+\text{G*H}) \qquad (1)$$

A ripple component Vmid_ripple which is not suppressed in this control system and remains in the intermediate voltage Vmid corresponds to a first member of the equation (1). The ripple component Vmid_ripple is expressed by the following equation (2).

$$\text{Vmid\_ripple} = \text{Vdis}/(1+\text{G*H}) \qquad (2)$$

The one-stage converter of the related art illustrated in FIG. 9 has a ripple component Vout_ripple of the output voltage which is the same as the Vmid_ripple. Therefore, when an allowable value of the output ripple is Vout_ripple_spec, it is necessary to satisfy the following equation (3).

$$\text{Vout\_ripple} = \text{Vmid\_ripple} = \text{Vdis}/(1+\text{G*H}) < \text{Vout\_ripple\_spec} \qquad (3)$$

In order to satisfy the equation (3), in the DC-DC converter 330 of the related art illustrated in FIG. 9, it is necessary to design the DC-DC converter 330 so that G*H is sufficient large at the frequency of 2*fac, or so that Vdis in itself introduced into the control loop is small by using the large-capacity smoothing capacitor 320. However, an increase of G*H leads to a decrease of a stability of the control loop. Since a large-capacity capacitor requires a large mounting area or volume, the implementation is difficult.

On the other hand, in the case of the DC-DC converters configured in two stages in the first technique, by using a model of the high-precision DC-DC converter 140 of the second stage illustrated in FIG. 5, the ripple component of the output electrode of the high-precision DC-DC converter 140 of the second stage is suppressed to approximately 1/(1+G2*H2). The ripple component of the output electrode of the high-precision DC-DC converter 140 is required to be less that the allowable value of the output voltage ripple. This relation is expressed by the following equation (4).

$$\text{Vout\_ripple} = \text{Vmid\_ripple}/(1+\text{G2*H2}) = \text{Vdis}/\{(1+\text{G*H})*(1+\text{G2*H2})\} <$$

$$\text{Vout\_ripple\_spec} \qquad (4)$$

The output Vmid of the coarse adjustment DC-DC converter 130 of the first stage may be controlled almost in an allowable input voltage range of the high-precision DC-DC converter 140 of the second-stage (a minimum value Vin2_min, a maximum value Vin2_max). In particular, gains of G and H may be determined to satisfy the following equation (5).

$$\text{Vin2\_min} < \text{Vmid} = \text{Vdis}/(1+\text{G*H})+\text{Vref*G*H}/(1+\text{G*H}) < \text{Vin2\_max} \qquad (5)$$

Under the condition satisfying the equations (4) and (5), the high-precision DC-DC converter 140 of the second stage may be designed as a general DC-DC converter. Since sufficient gains are set to G2 and H2, output ripple may be easily suppressed.

For example, when the output voltage is 24V DC, Vout_ripple_spec is set to 100mVpp. In addition, for example, Vin2_min is set to 80V, and Vin2_max is set to 120V For example, the open loop gain at the frequency of 2*fac of the coarse adjustment DC-DC converter is set to a value between 0 to 20db".

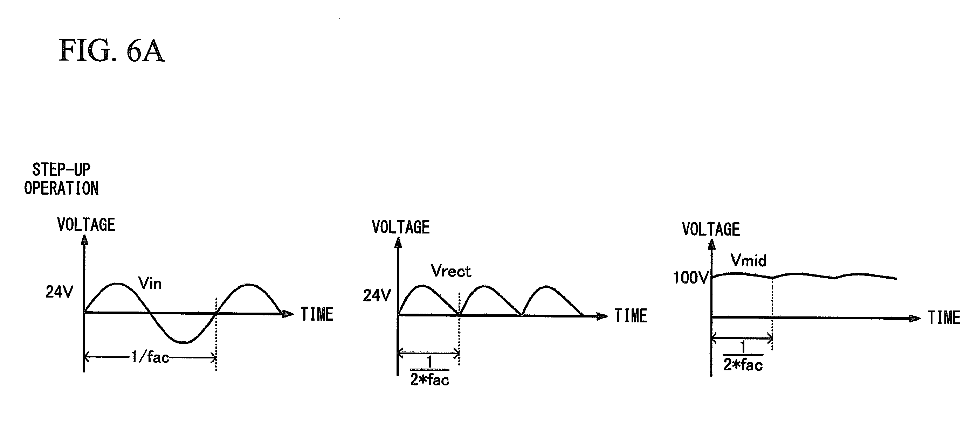

Each FIG. 6A to 6C is a diagram illustrating an operation of the coarse adjustment DC-DC converter 130. In this example, the intermediate voltage Vmid output by the coarse adjustment DC-DC converter 130 is set to 100 V In addition, the frequency of the input voltage Vin is fac and an AC ripple of the frequency of 2*fac is included in the smoothed voltage Vrect.

FIG. 6A is an example in which the input voltage Vin is a low voltage of 24 V effective value, and the coarse adjustment DC-DC converter 130 performs the step-up operation. Because the input voltage Vin is a low voltage, a large AC ripple is included in the smoothed voltage Vrect, and many ripple components that have not been suppressed are included in a stepped-up intermediate voltage Vmid. However, the ripple components are suppressed by the high-precision DC-DC converter 140 of the second stage. The effective value of the input voltage Vin which behaves as described above is, for example, ranged from 24V to 70V

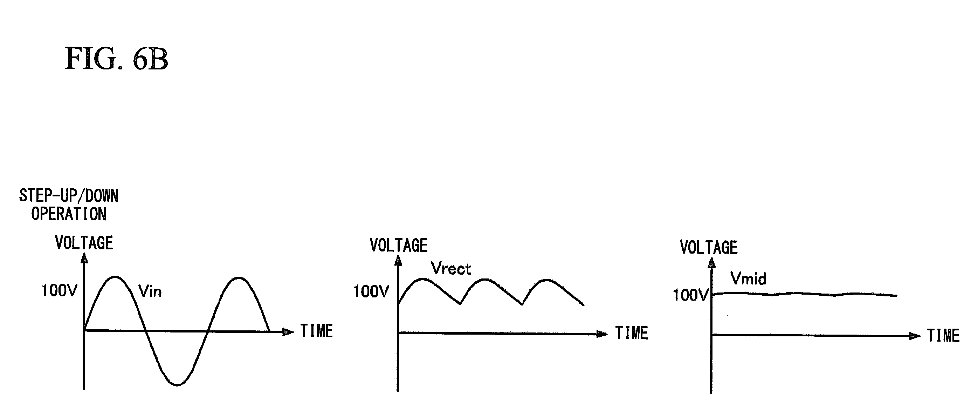

FIG. 6B is an example in which the input voltage Vin has the same level of 100 V effective value as the intermediate voltage Vmid, and the coarse adjustment DC-DC converter 130 performs a step-up/down operation according to fluctuation in the smoothed voltage Vrect. A ripple included in the smoothed voltage Vrect is less than when the input voltage Vin is a low voltage. Ripple components remain in a stepped-up/down intermediate voltage Vmid. However, the ripple components remained in the intermediate voltage Vmid in the case of the input voltage Vin of 100 V effective value are less than those of the input voltage Vin of 24 V effective value. The effective value of the input voltage Vin which behaves as described above is, for example, ranged from 70V to 120V

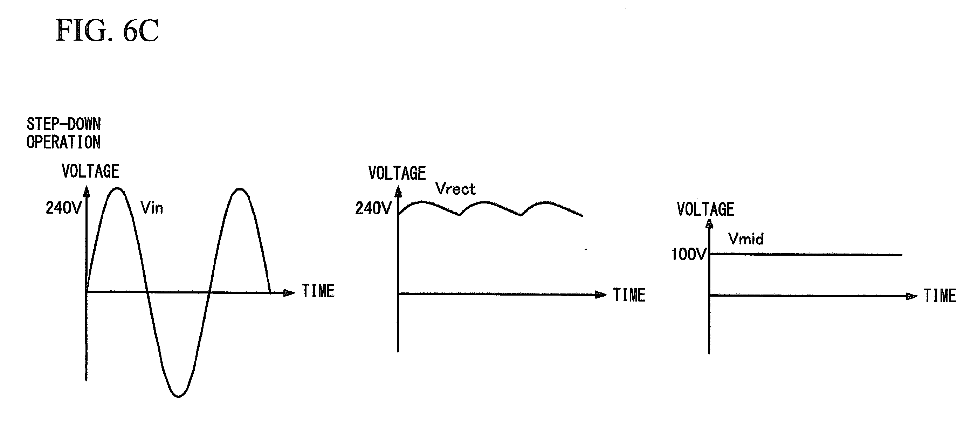

FIG. 6C is an example in which the input voltage Vin is a high voltage of 240 V effective value, and the coarse adjustment DC-DC converter 130 performs a step-down operation. A ripple included in the smoothed voltage Vrect is further reduced. A stepped-down intermediate voltage Vmid is substantially free of ripple component. The effective value of the input voltage Vin which behaves as described above is, for example, ranged from 120V to 240V Herein, the phrase "substantially free of ripple" means that a ripple component is not included at all, or that a negligible ripple component is included. In particular, the phrase "substantially free of ripple" means that a ripple component is 100mVpp.

In any case, the high-precision DC-DC converter 140 of the second stage converts the intermediate voltage Vmid into a predetermined output voltage Vout which satisfies an allowable ripple amount and is substantially free of ripple component, and outputs the predetermined output voltage Vout to the load circuit 400. In this manner, according to the first technique, because the switching power supply device 100 performs a normal operation even when the intermediate voltage Vmid includes a large AC ripple, the switching power supply device 100 is adaptable for a wide range of an input voltage without using a smoothing capacitor with a large-capacity.

(Second technique)

Next, a second technique in which the coarse adjustment DC-DC converter 130 is configured not to negatively affect the operation of the switching power supply device 100 even when the smoothed voltage Vrect includes a large AC ripple will be described.

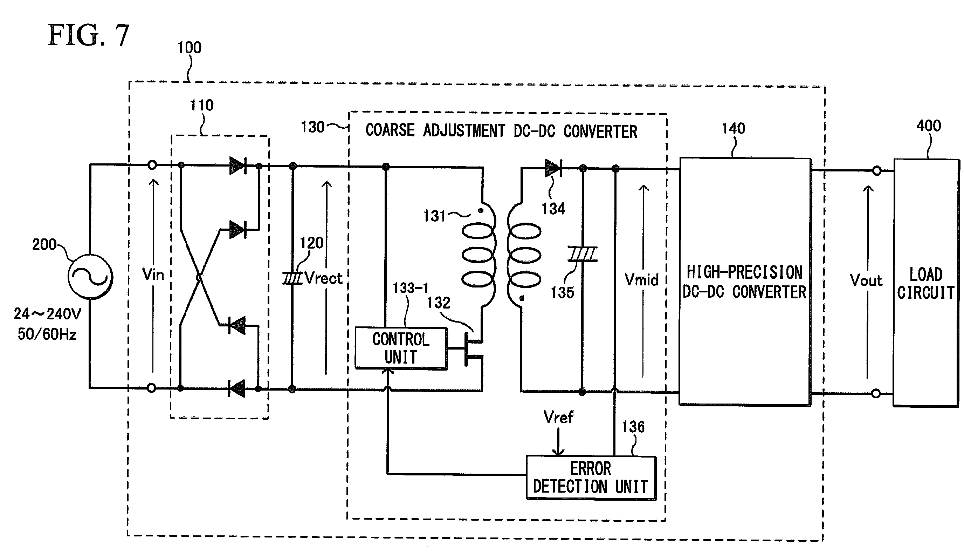

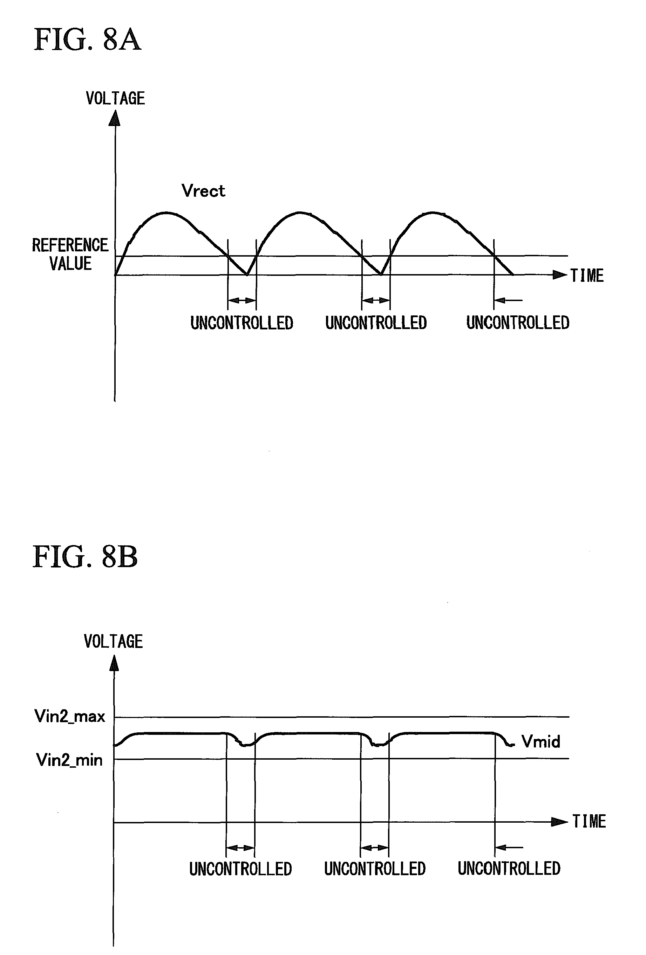

The DC-DC converter of the related art has an input voltage range which enable to perform the negative feedback control. If the input voltage deviates from this input voltage range, the converter oscillates abnormally, the operation of the control unit is stopped and instable, and the output voltage changes widely. On the other hand, in the second technique, as illustrated in FIG. 7, the control unit 133-1 is configured to detect the smoothed voltage Vrect. As illustrated in FIG. 8A, a duty ratio of the switch 132 is controlled and the negative feedback switching control is performed while the smoothed voltage Vrect is larger than a predetermined reference value, and the duty ratio of the switch 132 is not controlled and the negative feedback switching control is stopped while the smoothed voltage Vrect is equal to or less than a predetermined reference value. In particular, a pulse width is fixed to a predetermined value. The value of the fixed pulse width may be arbitrarily set.

In detail, FIG. 8A illustrates that the smoothed voltage Vrect includes a large ripple, and the input voltage drop below the input voltage range in which the ripple may be controlled. The control unit 133-1 detects the smoothed voltage Vrect, fixes the duty ratio of the switch 132 when the smoothed voltage Vrect is equal to or less than the predetermined reference value, stops the negative feedback switching control and makes the switch 132 into uncontrolled situation intentionally. Thereby, an instable operation is avoided. Next, when the smoothed voltage Vrect increases and exceeds the predetermined reference value, the operation of the control unit 133-1 returns to a normal negative feedback switching control operation. Since the negative feedback switching control is not performed in the uncontrolled period, the intermediate voltage Vmid fluctuates according to the load current Iload. The reference value is set so that the fluctuation range of the intermediate voltage Vmid in the uncontrolled operation is in the allowable input voltage range of the high-precision DC-DC converter 140 of the second stage (a minimum value Vin2_min, a maximum value Vin2_max).

For example, Vin2_min is set to 80V, and Vin2_max is set to 120V For example, the coarse adjustment DC-DC converter 130 is configured to inhibit the negative feedback switching control while the smoothed voltage Vrect is equal to or less than 5V

Because the control unit 133-1 does not control a duty ratio and therefore a state in which a feedback control loop is disconnected is reached, the intermediate voltage Vmid to be output is not forcibly increased. Therefore, the operation instability or the operation stop of the control unit 133-1 due to the lack of an input voltage may be prevented.

In this case, because many ripple components remain in the intermediate voltage Vmid as illustrated by a solid line of FIG. 8B, a reference value is set so that the duty ratio is not controlled in a range in which suppression by the high-precision DC-DC converter 140 of the second stage is possible.

As described above, because the switching power supply device 100 performs a normal operation even when the intermediate voltage Vmid includes a large AC ripple according to the second technique, the switching power supply device 100 is adaptable for a wide range of an input voltage without using a smoothing capacitor with a large-capacity.

**Claims**

1. A switching power supply device comprising:

   a rectifying circuit configured to rectify a first AC voltage having a first effective value and to output a first rectified voltage, the rectifying circuit being configured to rectify a second AC voltage having a second effective value larger than the first effective value and to output a second rectified voltage, and the rectifying circuit being configured to rectify a third AC voltage having a third effective value larger than the second effective value and to output a third rectified voltage;
   a smoothing capacitor configured to smooth the first rectified voltage and to output a first smoothed voltage, the smoothing capacitor being configured to smooth the second rectified voltage and to output a second smoothed voltage, and the smoothing capacitor being configured to smooth the third rectified voltage and to output a third smoothed voltage;
   a first DC-DC converter configured to convert the first smoothed voltage into a first intermediate voltage and to output the first intermediate voltage, the first DC-DC converter being configured to convert the second smoothed voltage into a second intermediate voltage and to output the second intermediate voltage, and the first DC-DC converter being configured to convert the third smoothed voltage into a third intermediate voltage and to output the third intermediate voltage, the first DC-DC converter being configured to perform a step-up operation and to output the first intermediate voltage including a ripple upon receipt of input of the first smoothed voltage, the first DC-DC converter being configured to perform a step-up operation or a step-down operation in response to variation in the smoothed voltage and to output the second intermediate voltage including a ripple lower than the ripple of the first intermediate voltage upon receipt of input of the second smoothed voltage, and the first DC-DC converter being configured to perform a step-down operation and to output the third intermediate voltage substantially free of ripple upon receipt of input of the third smoothed voltage; and
   a second DC-DC converter configured to receive any one of the first intermediate voltage, the second intermediate voltage, or the third intermediate voltage from the first DC-DC converter and to generate an output voltage substantially free of ripple.

2. The switching power supply device according to claim 1,
   wherein the first DC-DC converter is configured to have an open loop gain at a frequency which is twice larger than the frequency of the AC voltage where, at the open loop gain, the amount of ripple included in the output voltage of the second DC-DC converter is equal to or less than the upper limit of an allowable range of ripple in accordance with the specifications of the switching power supply device.

3. The switching power supply device according to claim 2,
   wherein the first DC-DC converter is configured to have an open loop gain G*H satisfying following Equations 1 and 2;

$$Vdis/\{(1+G*H)*(1+G2*H2)\} < Vout\_ripple\_spec \quad (1)$$

$$Vin2\_min < Vdis/(1+G*H)+Vref*G*H/(1+G*H) < Vin2\_max \qquad (2)$$

where,

Vout_ripple_spec is the allowable amount of ripple in accordance with the specifications of the switching power supply device,

Vdis is the disturbance component depending on the smoothed voltage and a load current,

Vin2_min is the allowable minimum input voltage of the second DC-DC converter,

Vin2_max is the allowable maximum input voltage of the second DC-DC converter,

G*H is the open loop gain of the first DC-DC converter,

G2*H2 is the open loop gain of the second DC-DC converter, and

Vref is the reference voltage.

4. The switching power supply device according to claim 2,
   wherein the first DC-DC converter is configured to have the open loop gain in the range of 0 to 20dB at the frequency which is twice larger than the frequency of the AC voltage.

5. The switching power supply device according to claim 3,
   wherein the output voltage is a DC voltage of 24V, the Vout_ripple_spec is 100mVpp, the Vin2_min is 80V, and the Vin2_max is 120V

6. The switching power supply device according to claim 1,
   wherein an effective value of the first AC voltage is ranged from 24V to 70V, an effective value of the second AC voltage is ranged from 70 V to 120V, and an effective value of the third AC voltage is ranged from 120V to 240V

7. The switching power supply device according to claim 6,
   wherein the effective value of the first AC voltage is 24V, the effective value of the second AC voltage is 100V, and the effective value of the third AC voltage is 240V

8. The switching power supply device according to claim 1,
   wherein the first DC-DC converter is configured to inhibit a negative feedback switching control while the first smoothed voltage is equal to or less than a predetermined reference value, and
   wherein a variation of the first intermediate voltage is in the allowable range of the input voltage into the second DC-DC converter while the first smoothed voltage is equal to or less than the reference value.

9. A switching power supply device comprising:

   a rectifying circuit configured to rectify an AC voltage and to output a rectified voltage;
   a smoothing capacitor configured to smooth the rectified voltage and to output a smoothed voltage;
   a first DC-DC converter configured to convert the smoothed voltage into an intermediate voltage and to output the intermediate voltage, the first DC-DC converter configured to inhibit a negative feedback switching control while the smoothed voltage is equal to or less than a predetermined reference value; and
   a second DC-DC converter configured to convert the intermediate voltage into an output voltage and to output the output voltage, a variation of the first intermediate voltage being in the allowable range of the input voltage into the second DC-DC converter while the first smoothed voltage is equal to or less than the reference value.

10. The switching power supply device according to claim 9,
    wherein the reference value is 5V.

11. The switching power supply device according to claim 10,
    wherein a minimum value of an allowable input voltage range of the input voltage into the second DC-DC converter is 80V, and a maximum value of an allowable input voltage range of the input voltage into the second DC-DC converter is 120V

12. The switching power supply device according to claim 9,
    wherein the first DC-DC converter comprises a transformer, a switch connected to the transformer, and a control unit connected to the switch, and
    wherein the control unit is configured to detect the smoothed voltage, and to inhibit a control of an on/off time ratio of the switch while the smoothed voltage is equal to or less than the predetermined reference value.

13. A method for circuit design of a switching power supply device, the switching power supply device comprising:

a rectifying circuit configured to rectify an AC voltage and to output a rectified voltage;
a smoothing capacitor configured to smooth the rectified voltage and to output a smoothed voltage;
a first DC-DC converter configured to convert the smoothed voltage into an intermediate voltage and to output the intermediate voltage; and
a second DC-DC converter configured to convert the intermediate voltage into an output voltage and to output the output voltage,
the method comprising determining an open loop gain G*H of the circuit of the first DC-DC converter to have the open loop gain satisfy the following equations 1 and 2;

$$Vdis/\{(1+G*H)*(1+G2*H2)\} < Vout\_ripple\_spec \quad (1)$$

$$Vin2\_min < Vdis/(1+G*H)+Vref*G*H/(1+G*H) < Vin2\_max \qquad (2)$$

where,

Vout_ripple_spec is the allowable amount of ripple in accordance with the specifications of the switching power supply device,
Vdis is the disturbance component depending on the smoothed voltage and a load current,
Vin2_min is the allowable minimum input voltage of the second DC-DC converter,
Vin2_max is the allowable maximum input voltage of the second DC-DC converter,
G*H is the open loop gain of the first DC-DC converter,
G2*H2 is the open loop gain of the second DC-DC converter, and
Vref is the reference voltage.

# FIG. 1

EP 2 713 490 A2

FIG. 2

FIG. 3

FIG. 4

Vdis(Vrect,Iload)

Vref ———→ + ○ ———→ G ———→ + ○ + ———→ Vmid
          −                       ↑ ←——— H ←———

FIG. 5

Vmid_ripple

Vref2 ———→ + ○ ———→ G2 ———→ + ○ + ———→ Vout
            −                    ↑ ←——— H2 ←———

FIG. 6A

STEP-UP OPERATION

Left graph: VOLTAGE vs TIME, 24V, $V_{in}$, $1/f_{ac}$

Middle graph: VOLTAGE vs TIME, 24V, $V_{rect}$, $\dfrac{1}{2*f_{ac}}$

Right graph: VOLTAGE vs TIME, 100V, $V_{mid}$, $\dfrac{1}{2*f_{ac}}$

15

EP 2 713 490 A2

# FIG. 6B

STEP-UP/DOWN
OPERATION

# FIG. 6C

STEP-DOWN
OPERATION

FIG. 7

EP 2 713 490 A2

# FIG. 8A

# FIG. 8B

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012216548 A
- JP 2013199008 A
- JP 2002010643 A
- US 6591693 B